# EUROPEAN PATENT APPLICATION

(11) **EP 2 690 231 A1**
(43) Date of publication of application: **29.01.2014**
(21) Application number: 12178013.4
(22) Date of filing: 26.07.2012
(51) Int. Cl.: E04B 9/30, B44C 7/02, E04F 13/08, F16B 5/06, E04B 1/82

(54) **A wall panel system and a profile assembly for joining wall panels**

(71) Applicant: Rockwool International A/S, 2640 Hedehusene (DK)
(72) Inventor: Mosiadz, Maciej Grzegorz, 65-012 Zielona Gora (PL)
(74) Representative: Høiberg A/S

(57) **Abstract**

The present invention concerns a wall panel system comprising at least one profile assembly (4, 7) and at least one wall panel (2), said wall panel having a front tissue with an oversize (3) along at least two opposite sides, said profile assembly comprises a profile (4) for receiving the tissue oversize (3), when said panel (2) is provided adjacent the profile (4)and the tissue oversize (3) is inserted into a slit (10), wherein a resilient insert 5) is provided in a longitudinal groove in the profile (4), and in that the slit (10) for receiving and retaining the tissue oversize (3) is provided in said resilient insert (5).

## Description

The present invention relates to a wall panel system comprising at least one profile assembly and at least one wall panel, said wall panel having a front tissue with an oversize along at least two opposite sides, said profile assembly comprises a profile for receiving the tissue oversize, when said panel is provided adjacent the profile and the tissue oversize is inserted into a slit. The invention further relates to a profile assembly for such wall panel system.

A wall covering system for joining two wall panels of kind is known from EP-A-0 057 655, which relates to a joining profile for a composite, thick and flexible wall covering of the type consisting of a surface covering layer solid with a core of foam or the like. The joining profile consists of a hollow tubular section of quadrangular cross-section and provided longitudinally in the central portion of one of its faces with a slot of a constant width substantially equal to twice the thickness of the said surface covering layer. The profile is fixed by any appropriate means against the wall between the two panels to be joined with its slotted face turned towards the outside. The panels are fixed to the wall.

In BE 821495 there is disclosed a fixing of a decorative covering to a wall. The decorative covering comprises a layer of elastic foam and a front tissue. The covering is held to the wall by profiles comprising barbs gripping into the back side of the covering and a slit where the edge of the covering is inserted.

Other wall covering systems are known from US 5,214,892 and US 5,970,669 that disclose a strip element for fabric wall and ceiling systems. The strip element holds a covering over e.g. an acoustical core element. The covering is not attached to the acoustical core element.

In order to facilitate an easier mounting of the joining panels, the invention concerns an improved wall covering system and a profile assembly of the initially mentioned kind, wherein a resilient insert a resilient insert is provided in a longitudinal groove in the profile, and in that the slit for receiving and retaining the tissue oversize is provided in said resilient insert.

By the invention it is realised that the wall panel system and the associated profile assembly is suitable for retaining one wall panel with tissue oversize. However, it is also realised that the system and the profile assembly according to the invention is also advantageous when two wall panels are provided on each side of the profile and tissue oversize of both panels are inserted into the slit of the profile.

By a wall panel system according to an aspect of the present invention, the panel or panels is/are provided with an oversized cover tissue, such as a textile sheet or other flexible sheet material, which is attached to a panel board by gluing or the like. The profiles are mounted on the wall to be covered and the panels are mounted solely by inserting the oversized tissue of two adjoining panels into the profile slit.

By providing the slit in a resilient insert strip which is inserted into a groove in the profile, the oversize portions of the tissues of the two adjoining panels can simply be pressed into the slit of the profile due to the resilience. Also due to the resiliency of the insert strip, the panels are thereby retained in the profile as the resiliency of the strip generated retention forces in the slit. The slit is preferably so deep that the entire oversize tissue portions can be accommodated therein and so that the tissues - and thereby the panels - are not merely retained by a linear retention force in the profile but rather by retention forces acting on substantially the entire surface of the tissue oversize portions inserted into the slit. According to the invention, the retention forces generated are sufficient to hold the panels in place without having to glue the panels onto substrate. This makes the mounting of the wall panel system according to the invention much easier and quicker to install. Furthermore as no glue or other permanent holding means are used, it is possible to demount the wall panel, e.g. for adjusting the panel or to replace a panel with a new one.

The profile is preferably mounted to a substrate via mounting brackets. Hereby, any irregularities or uneven surface portions on the substrate, such as the wall, can be corrected and absorbed so that the wall covering is nevertheless smooth and even in its final appearance. Preferably, the profile is provided with a mounting portion behind the longitudinal groove so that the resilient strip and thereby the retentional function is not compromised by the profile mounting in the wall, e.g. by screws penetrating the insert strip or the like.

The profile may be an extruded aluminium profile or the like. Preferably, the profile is provided with retention means inside the longitudinal groove for receiving and retaining the insert strip. This helps in providing a firm retention of the strip inside the groove of the profile.

As the insert strip may be provided with a certain oversize compared to the size of the groove, the resiliency of the strip will facilitate its retention in the groove.

In an embodiment of the invention, the resilient insert is a folded insert whereby the slit is provided in the folded state. When mounted in the groove, the resiliency of the insert strip will attempt to unfold the insert whereby retention forces between the insert and the profile is created. Moreover, on the inside of the fold, the insert may be formed with a plurality of protrusions for providing a firm grip of the tissue portions when these are inserted in the profile assembly.

In a preferred embodiment of the invention, the resilient insert is made of rubber. However, it is realised that other resilient materials either natural or synthetic may be used. It may be found advantageous to choose the material of the insert in accordance with the material of the tissue covers on the panels in order to ensure a maximum frictional grip in the slit mounting of the panels in the profile.

In a preferred embodiment of the invention, each of the wall panel comprises a panel sheet to which the oversized front tissue is glued. The panel sheet is preferably an acoustical insulating or absorbing mineral fibre board.

By the invention it is realised that the wall panel system may be either a vertical wall cover of a partitioning wall in a building or a ceiling cover.

In the following, the invention is described in more detail with reference to the accompanying drawings, in which:
- Fig. 1: is a schematic cross-sectional view of a wall panel system according to an embodiment of the invention;
- fig. 2 a) and b): are cross-section views of the wall panels in the wall panel system of fig. 1;
- fig. 3: is a schematic cross-section view of a profile assembly according to an embodiment of the invention; and
- fig. 4: is a perspective view of a wall panel system of the invention.

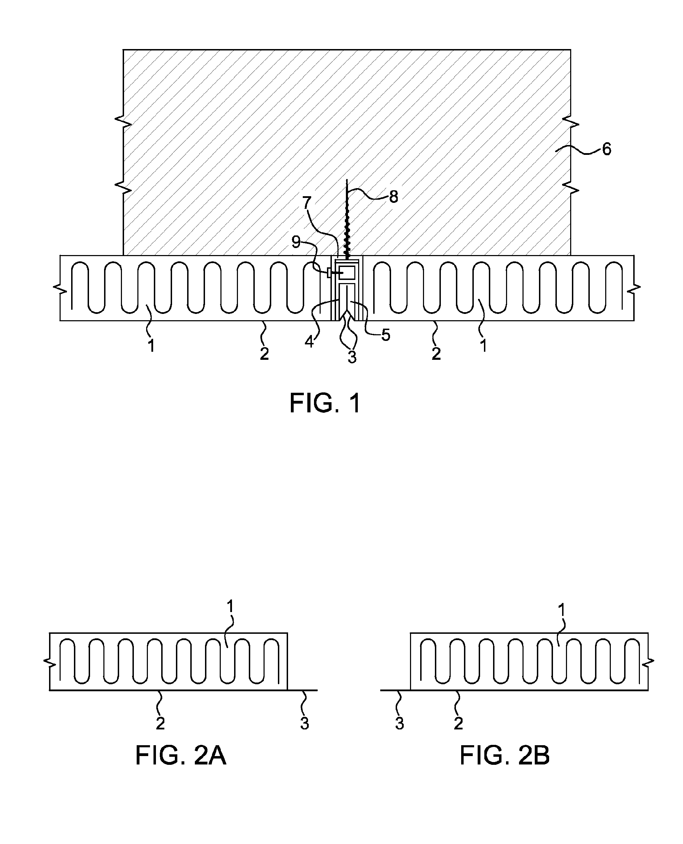

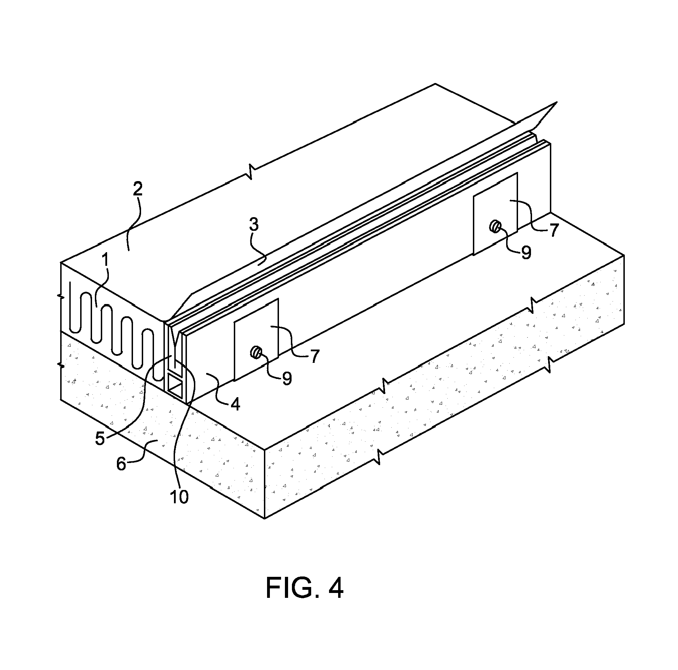

With reference to figures 1 and 2a and 2b, two wall panels 1 are provided with a front tissue 2 glued on the front side of the panel 1. The tissue 2 is provided with an oversize so that an oversize portion 3 is provided. The panels 1 are mounted on a substrate 6, such as a partitioning wall in a building, via a number of profiles 4 of which one is shown in fig. 1. The profile 4 is fixedly mounted with a screw 9 or the like to a mounting bracket 7 which is fixed to the substrate structure 6 via a screw 8. As shown in fig. 4, the profile 4 may be mounted via two or more mounting brackets 7 to the substrate 6 at discrete mounting points.

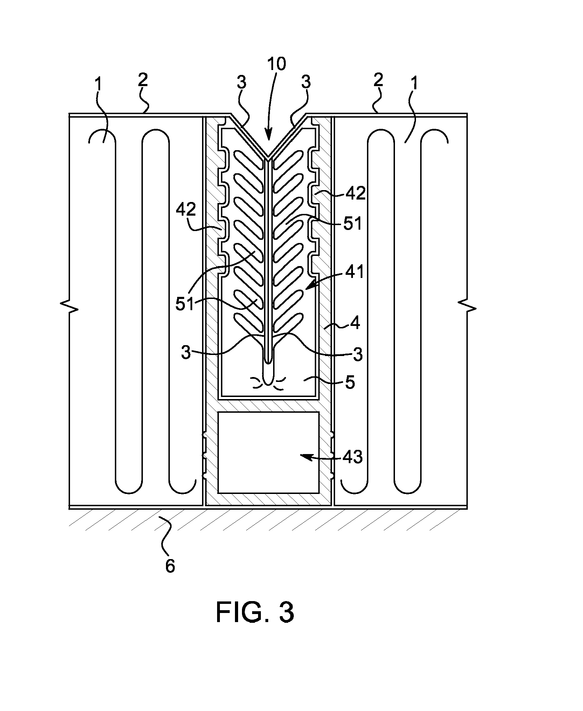

The profile 4 is provided with an insert strip 5 running in substantially the full length of the profile 4 in the groove 41 formed within the profile 4 (see figs. 3 and 4). The insert 5 is made of a resilient material, such as rubber or the like. The insert 5 is provided with a slit 10 for receiving the oversize tissue portions 3 of the two adjoining wall panels 1. The slit 10 may be formed in the insert 5 by a cut in the middle of the insert 5, as shown in fig. 1 or the insert 5 may be a strip which is folded whereby the slit 10 is formed between the two sides of the strip, such as shown in fig. 3. With reference to fig. 3, the insert strip 5 may preferably be provided with a series of protrusions 51 pointing towards the bottom of the slit 10 (or the centre line of the strip in its unfolded configuration) (not shown) whereby these protrusions 51 function as retention members ensuring a firm grip on the two tissue portions 3 inserted into the slit 10.

The profile 4 may be an extruded profile in aluminium, plastic or other suitable materials. As mentioned above, the profile 4 is provided with a groove 41 on the distal end of the profile 4 for receiving and accommodating the insert strip 5. On the sides of this groove 41 irregularities 42, such as small protrusions, in the surface may be provided in order to enhance the retention of the insert 5 when it is inserted in the groove 41. One the side of the profile 4 opposite the groove 41 a mounting portion 43 is provided. When the profile 4 is fitted into position in the mounting brackets 7 (see fig. 4), this mounting portion 43 will receive the attachment member 9, preferably a screw, for the securing of the profile 4 in the mounting bracket 7.

In fig. 4, the profile assembly is shown when mounted on the substrate 6 but with only one panel 1 fitted and where the oversize tissue portion 3 is not yet fitted into the slit 10 of the resilient insert 5. When fitting the tissue portion 3 in the resilient insert 5 of the profile assembly, a simple tool may be required to ensure a proper fitting of the tissue portion 3 in the slit. However, by the present invention it is realised that the retention forces generated by the resilient insert 5 are sufficient to firmly hold the panels in the required position between the profiles 4 without having to glue the panels 1 onto substrate 6. This makes the mounting of the wall panel system according to the invention much easier and quicker to install.

Above the invention is described with reference to some currently preferred embodiments. However, it is realised that other embodiment of the invention may be provided without departing from the scope of the invention as defined in the accompanying claims. For instance, in the figures only one profile assembly is shown with a panel on each side thereof. However, it is realised that a profile assembly would suitably be provided on two opposing side of a wall panel, if the wall panel is not otherwise supported at one of the sides. It is also realised that the invention also concerns a wall panel on one side of the profile only and therefore only one oversize tissue sheet is inserted into the slit of the resilient insert of the profile assembly.

## Claims

1. A wall panel system comprising at least one profile assembly and at least one wall panel, said wall panel having a front tissue with an oversize along at least two opposite sides, said profile assembly comprises
a profile for receiving the tissue oversize, when said panel is provided adjacent the profile and the tissue oversize is inserted into a slit,
**characterised in that**
a resilient insert is provided in a longitudinal groove in the profile, and **in that** the slit for receiving and retaining the tissue oversize is provided in said resilient insert.

2. A wall panel system according to claim 1, wherein the profile is mounted to a substrate via mounting brackets.

3. A wall panel system according to claim 1 or 2, wherein the wall panel comprises a panel sheet to which the oversized front tissue is glued.

4. A wall panel system according to any of the preceding claims, wherein the panel sheet is an acoustical insulating mineral fibre board.

5. A wall panel system according to any of the preceding claims, wherein the wall panel system constitutes a vertical wall cover of a partitioning wall in a building.

6. A wall panel system according to any of the preceding claims, wherein the wall panel system constitutes a ceiling cover.

7. A wall panel system according to any of the preceding claims, wherein two wall panels are provided on each side of the profile and tissue oversize of both panels are inserted into the slit of the profile.

8. A profile assembly for a wall panel system according to any of the preceding claims, where the profile assembly is adapted for retaining at least one wall panels of the kind having a front tissue with an oversize along at least one side, said profile assembly comprising
a profile for receiving the tissue oversize of at least one wall panel, by inserting and the tissue oversize into a slit,
**characterised in that**
a resilient insert is provided in a longitudinal groove in the profile, and **in that** the slit for receiving and retaining the tissue oversize is provided in said resilient insert.

9. A profile assembly according to claim 8, wherein the resilient insert is a folded insert whereby the slit is provided in the folded state.

10. A profile assembly according to claim 8 or 9, wherein the resilient insert is a made of rubber.

11. A profile assembly according to any of claims 8 to 10, wherein the profile may be an extruded aluminium profile or the like.

12. A profile assembly according to any of claims 8 to 11, wherein the profile is provided with retention means inside the longitudinal groove.

13. A profile assembly according to any of claims 8 to 12, wherein the profile is provided with a mounting portion behind the longitudinal groove.
